# EUROPÄISCHE PATENTANMELDUNG

(11) **EP 3 534 183 A1**
(43) Veröffentlichungstag der Anmeldung: **04.09.2019**
(21) Anmeldenummer: 19156558.9
(22) Anmeldetag: 12.02.2019
(51) Int. Cl.: G01S 19/14, G01S 19/35, A01B 69/00, G05D 1/02

(54) **AGRARSYSTEM**

(30) Priorität: 01.03.2018 DE 102018203051
(71) Anmelder: Robert Bosch GmbH, 70442 Stuttgart (DE)
(72) Erfinder: LEIDENFROST, Roland, 71717 Beilstein (DE); GAESSLER, Gabriel, 71272 Renningen (DE); PETEREIT, Steffen, 71691 Freiberg A. N. (DE); DI MARCO, Daniel, 70469 Stuttgart (DE); MICHAELS, Andreas, 71106 Magstadt (DE); HOEFERLIN, Markus, 75397 Simmozheim (DE); MUGELE, Tobias, 71277 Rutesheim (DE); FUCHS, Steffen, San Jose, CA 95133 (US)

(57) **Zusammenfassung**

Die Erfindung betrifft ein Agrarsystem (1) mit mehreren mobilen teil- oder vollautonom betreibbaren Arbeitsmaschinen (2,3) und mit einem Ortungssystem (5) zum Lokalisieren und/oder Steuern zumindest einer der Arbeitsmaschinen (2,3), wobei das Ortungssystem (5) zumindest ein Ortungsmodul (7) aufweist, das dazu ausgebildet ist, seine Position durch satellitengestützte Navigation festzustellen. Es ist vorgesehen, dass das Ortungsmodul (7) austauschbar an jeder der Arbeitsmaschinen (2,3) befestigbar ist.

## Beschreibung

Die Erfindung betrifft ein Agrarsystem mit mehreren mobilen teil- oder vollautonom betreibbaren Arbeitsmaschinen und mit einem Ortungssystem zum Lokalisieren oder Steuern zumindest einer der Arbeitsmaschinen, wobei das Ortungssystem zumindest ein Ortungsmodul aufweist, das dazu ausgebildet ist, seine Position durch satellitengestützte Navigation festzustellen.

### Stand der Technik

Agrarsysteme der eingangs genannten Art sind aus dem Stand der Technik bekannt. Insbesondere teil- oder vollautonom betreibbare Arbeitsmaschinen, die sich mobil beispielsweise über ein Agrarfeld bewegen, werden heutzutage mit einem Ortungsmodul ausgestattet, welches die Position der Arbeitsmaschine mittels satellitengestützter Navigation überwacht, beispielsweise um steuernd einzugreifen, eine Fahrtrajektorie vorzugeben und/oder um festzustellen, ob sich die Arbeitsmaschine noch in einem erlaubten Bereich befindet oder unbefugterweise von dem Feld entfernt wurde.

### Offenbarung der Erfindung

Das erfindungsgemäße Agrarsystem mit den Merkmalen des Anspruchs 1 hat den Vorteil, dass das Ortungssystem variabel gestaltet ist und damit dem Benutzer des Agrarsystems eine kostengünstige Möglichkeit zur Verfügung stellt, seine Arbeitsmaschinen zu überwachen. Erfindungsgemäß ist hierzu vorgesehen, dass das Ortungsmodul austauschbar an jeder der Arbeitsmaschinen befestigbar ist. Das Ortungsmodul ist somit ein mobiles Modul, das von dem Benutzer an der einen oder anderen Arbeitsmaschine befestigt werden kann, um deren Position zu orten und/oder zu überwachen. Dadurch reichen für den Benutzer ein oder nur wenige Ortungsmodule aus, um beispielsweise eine ganze Flotte von ihm zur Verfügung stehenden Arbeitsmaschinen des Agrarsystems zu überwachen.

Besonders bevorzugt weist das Ortungsmodul eine Halteeinrichtung zum lösbaren Befestigen an jeder der Arbeitsmaschinen auf. Damit ist das Ortungsmodul besonders variabel an den Arbeitsmaschinen befestigbar und kann beispielsweise auch an Arbeitsmaschinen befestigt werden, welche nicht unbedingt Teil des Agrarsystems sind und beispielsweise keine vorgesehene Stelle zur Befestigung des Ortungsmoduls aufweisen. Dadurch kann der Benutzer sein Agrarsystem einfach auch mit agrarsystemfremden Arbeitsmaschinen erweitern.

Weiterhin ist bevorzugt vorgesehen, dass die Halteeinrichtung zumindest ein selbsthaftendes Element, wenigstens eine Befestigungsschraube, -Klemme oder -Raste aufweist. Damit ist die Halteeinrichtung einfach an unterschiedlichen Arbeitsmaschinen befestigbar. Als selbsthaftendes Element ist insbesondere ein Klettverschluss, ein Elektromagnet oder Permanentmagnet und/oder eine Pneumatiksaugeinrichtung, insbesondere mechanische betrieben, beispielsweise als Saugnapf, vorhanden, um das Ortungsmodul an der jeweiligen Arbeitsmaschine zu befestigen. Mittels der Befestigungsschraube, insbesondere mittels mehrerer Befestigungsschrauben ist das Ortungsmodul an der jeweiligen Arbeitsmaschine verschraubbar, durch die Klemme verklemmbar und durch die Raste verrastbar. In jedem Fall ergibt sich eine einfache Befestigung des Ortungsmoduls an der jeweiligen Arbeitsmaschine sowie eine einfache Lösbarkeit der Befestigung.

Ferner weist das Ortungsmodul bevorzugt einen eigenen Energiespeicher auf. Dadurch ist das Ortungsmodul autark betreibbar und eine elektrische Verbindung mit der jeweiligen Arbeitsmaschine ist nicht unbedingt notwendig.

Weiterhin weist das Ortungsmodul bevorzugt eine Auswerteeinheit auf, die insbesondere dazu dient, die Daten der satellitengestützten Navigation auszuwerten, um die Lokalisierung aufzubereiten oder vorzubereiten. Die Auswerteeinheit weist beispielsweise eine Recheneinheit auf, die in Abhängigkeit der erfassten Navigationsdaten die Position der Ortungseinheit selbst feststellt und die so ermittelte Position einer übergeordneten Basisstation des Ortungssystems zur Verfügung stellt. Alternativ übermittelt das Ortungsmodul lediglich die erfassten Navigationsdaten, die dann von der Basisstation ausgewertet werden, um die Position des Ortungsmoduls und damit die Position der das Ortungsmodul aufweisenden Arbeitsmaschine festzustellen.

Gemäß einer bevorzugten Weiterbildung der Erfindung weist das Ortungsmodul eine Umfeldsensorik auf. Die Umfeldsensorik weist beispielsweise eine Kameraeinrichtung, eine Radareinrichtung, eine Lidareinrichtung, eine Abstandsmesseinrichtung, und/oder einen oder mehrere Ultraschallsensoren auf, um das Umfeld des Ortungsmoduls und damit das Umfeld der zugeordneten Arbeitsmaschine im Betrieb zu überwachen. Hierdurch können auch noch weitere Informationen über den Ort des Ortungsmoduls ermittelt und ausgewertet werden.

Weiterhin weist das Ortungsmodul bevorzugt zumindest einen Beschleunigungssensor auf. Mittels des Beschleunigungssensors ist beispielsweise auch die Lokalisierung des Ortungsmoduls durchführbar, indem beispielsweise mittels des Beschleunigungssensors Steigungen erkannt werden können.

Besonders bevorzugt weist das Ortungsmodul einen Datenspeicher auf, in welchem die erfassten Daten der satellitengestützten Navigation, der Auswerteeinheit, der Umfeldsensorik und/oder des Beschleunigungssensors gespeichert werden. Der Datenspeicher kann beispielsweise zu einem späteren Zeitpunkt ausgelesen und ausgewertet werden. Alternativ werden in dem Datenspeicher die Daten gepuffert, intern durch die Recheneinheit ausgewertet und dann beispielsweise zu vorbestimmten Zeitpunkten, insbesondere regelmäßig an die übergeordnete Basisstation gesendet.

Gemäß einer bevorzugten Weiterbildung der Erfindung weist das Ortungsmodul zumindest eine Stromversorgungsschnittstelle und/oder zumindest eine Datenübertragungsschnitte auf. Über die genannten Schnittstellen ist zum einen eine Energieversorgung des Ortungsmoduls möglich, insbesondere dann, wenn dieses keinen eigenen Energiespeicher aufweist, und zum anderen ein einfacher Datenaustausch zwischen dem Ortungsmodul und der Arbeitsmaschine, die eine entsprechende Stromversorgungsschnittstelle und/oder eine entsprechende Datenübertragungsschnittstelle aufweist, um mit dem Ortungsmodul zu kommunizieren. Die Schnittstellen sind bevorzugt kabellos oder kabelgebunden, also auf Berührungskontakt basierend ausgebildet. Dabei kommen beispielsweise Schnittstellen, wie WLAN, Bluetooth, NFC-Technologie oder Ähnliches in Frage. Auch kann die Datenübertragungsschnittstelle beispielsweise als USB-Anschluss oder sonstiger Anschluss für ein Wechselspeichermedium ausgebildet sein. Auch kann die Schnittstelle ein Mobilfunkmodul oder Funkmodul aufweisen, mittels dessen die erfassten Daten und/oder Positionen des Ortungsmoduls an insbesondere die Basisstation übermittelt werden können.

Gemäß einer bevorzugten Weiterbildung der Erfindung weist das Ortungsmodul ein Wetterschutzgehäuse auf, welches die einzelnen Komponenten des Ortungsmoduls vor der Witterung schützt. Insbesondere sind die oben genannten Einheiten und Einrichtungen des Ortungsmoduls in dem Wetterschutzgehäuse angeordnet. Vorzugsweise ist die Halteeinrichtung dem Wetterschutzgehäuse zugeordnet, um eine einfache Befestigung des Ortungsmoduls an der Arbeitsmaschine zu erlauben, ohne dass der Benutzer selbst mit den darin befindlichen Einheiten und/oder Einrichtungen in Berührung kommt.

Weiterhin weist das Agrarsystem bevorzugt zumindest eine stationäre Ladestation auf, auf welcher das Ortungsmodul anordenbar ist, wenn es sich nicht in Gebrauch befindet. Bevorzugt weist die Ladestation eine Stromversorgungsschnittstelle und/oder Datenübertragungsschnittstelle auf, die mit der Stromversorgungsschnittstelle und/oder Datenübertragungsschnittstelle des Ortungsmoduls zusammenwirkt, um beispielsweise den Energiespeicher des Ortungsmoduls aufzuladen und die in dem Datenspeicher hinterlegten Daten auszulesen und kabelgebunden und/oder kabellos der Basisstation zur Verfügung zu stellen.

Vorzugsweise ist zumindest einer der Arbeitsmaschinen ein Unkrautvernichtungsroboter oder eine Sämaschine. Auch andere Arbeitsmaschinen, wie Mähmaschinen, Schneidemaschinen, Erntemaschinen, Bewässerungsmaschinen, Düngemaschinen oder dergleichen kommen als Arbeitsmaschine in Frage.

Im Folgenden soll die Erfindung anhand der Zeichnung näher erläutert werden. Dazu zeigen
- Figur 1: ein vorteilhaftes Agrarsystem in einer vereinfachten Darstellung und
- Figur 2: ein Ortungsmodul des Agrarsystems in einer vereinfachten Darstellung.

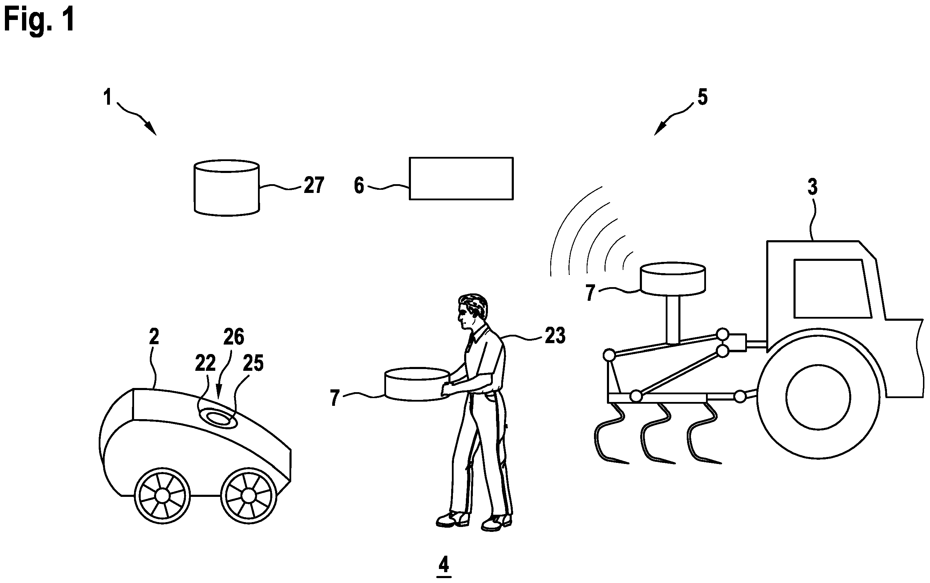

Figur 1 zeigt in einer vereinfachten Darstellung ein Agrarsystem 1 zum Bearbeiten eines Agrarfelds. Das Agrarsystem 1 weist gemäß dem vorliegenden Ausführungsbeispiel zwei Arbeitsmaschinen 2 und 3 auf, die insbesondere vollautonom betreibbar sind und als mobile Arbeitsgeräte einen Antrieb zum Fortbewegen auf dem zu bearbeitenden Feld 4 aufweisen. Die Antriebsmaschinen 2, 3 sind außerdem auch lenkbar ausgebildet, sodass sie entlang einer vorgegebenen Trajektorie über das Feld 4 fahren. Zum Überwachen des ordnungsgemäßen Betriebs weist das Agrarsystem 1 außerdem ein Ortungssystem 5 auf. Das Ortungssystem 5 weist vorliegend eine Basisstation 6 auf, die insbesondere stationär auf oder an dem Feld 4 angeordnet ist, sowie ein oder mehrere zumindest im Wesentlichen gleich ausgebildete Ortungsmodule 7.

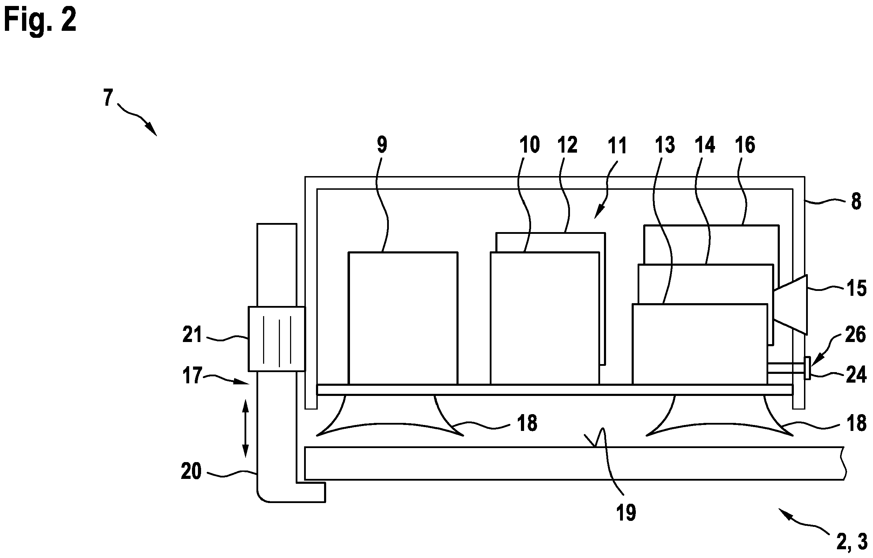

Figur 2 zeigt in einer vereinfachten Schnittdarstellung eines der Ortungsmodule 7. Dieses weist ein Wetterschutzgehäuse 8 auf, in welchem mehrere elektrische/elektronische Komponenten geschützt angeordnet sind. Insbesondere weist das Ortungsmodul 7 ein Navigationsmodul 9 auf, das dazu ausgebildet ist, durch satellitengestützte Navigation den Ort beziehungsweise die Position des Ortungsmoduls 7 im Koordinatensystem des Navigationssystems festzustellen. Bei dem Navigationsmodul 9 handelt es sich insbesondere um einen Empfänger zum Empfangen von Satellitensignalen des satellitengestützten Navigationssystems. Weiterhin weist das Ortungsmodul 7 eine Recheneinheit 10 auf, die mit dem Navigationsmodul 9 verbunden ist, und in Abhängigkeit von den vom Navigationsmodul 9 erfassten Daten die Position des Ortungsmoduls 7 bestimmt. Außerdem weist das Ortungsmodul 7 eine Kommunikationsschnittstelle 11 in Form eines Funkmoduls 12 auf, das dazu ausgebildet ist, mit der Basisstation 6 drahtlos zu kommunizieren. Insbesondere wird durch die Kommunikationsschnittstelle 11 die von der Recheneinheit 10 festgestellte Position des Ortungsmoduls 7 an die Basisstellen 6 übermittelt und optional Befehle von der Basisstation 6 erhält.

Außerdem weist das Ortungsmodul 8 vorliegend einen elektrischen Energiespeicher 13 auf, der die Recheneinheit 10, das Navigationsmodul 9 und die Kommunikationsschnittstelle 11 mit elektrischer Energie versorgt. Dadurch ist das Ortungsmodul 7 autark beziehungsweise autonom betreibbar.

Weiterhin weist das Ortungsmodul 7 optional eine Umfeldsensorik 14 auf, die beispielsweise einen Sensor 15 zum Ermitteln einer Position, insbesondere Relativposition, des Ortungsmoduls 7 zu in der Nähe befindlichen Gegenständen aufweist. Bei dem Sensor 15 kann es sich beispielsweise um einen Radarsensor, Ultraschallsensor, Lidarsensor, Lasersensor oder auch um einen Kamerasensor handeln, welcher die Umgebung bildlich erfasst und auswertet. Der Sensor 15 durchstößt dabei bevorzugt ein Abschnitt des Gehäuses 8, sodass er durch das Gehäuse 8 nicht beeinträchtigt wird.

Weiterhin weist das Ortungsmodul 7 bevorzugt einen Datenspeicher 16 auf, welcher die von der Recheneinheit 10 ermittelten Positionsdaten und gegebenenfalls die von der Umfeldsensorik 14 erfassten Umgebungsdaten für die spätere Verarbeitung oder Auswertung speichert. Optional sind in dem Wetterschutzgehäuse 8 auch Sensoren integriert, welche Parameter im Umfeld des Ortungsmoduls 7 erfassen, wie beispielsweise Temperatursensoren zum Erfassen der Umgebungstemperatur, Feuchtigkeitssensoren zum Erfassen der Luftfeuchtigkeit oder dergleichen. Auch die von diesen Sensoren erfassten Daten werden bevorzugt in den Datenspeicher 16 hinterlegt und für eine spätere Auswertung oder eine Online-Auswertung herangezogen.

Zum Befestigen des Ortungsmoduls 7 an einer der Arbeitsmaschinen 2, 3 weist dieses eine Halteeinrichtung 17 auf, die eine lösbare Befestigung des Ortungsmoduls 7 erlaubt. Figur 2 zeigt dabei zwei Ausführungsbeispiele, die auch miteinander kombiniert werden können.

Zum einen weist das Wetterschutzgehäuse 8 an seiner Unterseite mehrere elastisch verformbare Saugnäpfe 18 auf, die durch einfaches Aufdrücken auf eine ebene/glatte Oberfläche 19 der jeweiligen Arbeitsmaschine 2, 7 elastisch verformt werden, wodurch Luft zwischen dem jeweiligen Saugnapf 18 und der Arbeitsmaschine 2, 3 verdrängt wird, und anschließend aufgrund der Eigenelastizität in ihre Ursprungsposition zurück drängen, wobei der dadurch resultierende Unterdruck im Zwischenraum zwischen dem jeweiligen Saugnapf 18 und der Oberfläche 19 der entsprechenden Arbeitsmaschine 2 oder 3 ein Lösen der Verbindung verhindert.

Alternativ oder zusätzlich weist die Halteeinrichtung 17 einen oder mehrere Klemmschieber 20 auf, die translatorisch an dem Gehäuse 8 verlagerbar sind, wie durch einen Doppelpfeil in Figur 2 angezeigt, um das Gehäuse 8 an einem Hintergriff der jeweiligen Arbeitsmaschine 2, 3 formschlüssig zu arretieren. Der Klemmschieber ist beispielsweise durch eine Rastvorrichtung 21 an dem Gehäuse 8 verschiebbar gelagert, durch welche der Klemmschieber an mehreren Rastpositionen im Gehäuse 8 festlegbar ist, um dadurch das Ortungsmodul 7 formschlüssig an der Antriebsmaschine 2 oder 3 zu halten.

Optional kann die jeweilige Antriebsmaschine 2 auch mit einer Aufnahme 22 ausgebildet sein, wie beispielsweise in Figur 1 an der Arbeitsmaschine 2 gezeigt, in welche das Ortungsmodul 7 einsetzbar ist. Dazu weist die Aufnahme 22 insbesondere eine Außenkontur auf, die im Wesentlichen der Außenkontur des Ortungsmoduls 7 entspricht.

Durch die lösbare Befestigung des Ortungsmoduls kann ein Benutzer 23 das Ortungsmodul mal der einen mal der anderen Arbeitsmaschine 2, 3 zuordnen, um diese jederzeit orten zu können. Durch den Energiespeicher 13 ist eine aktive Energieversorgung durch die jeweilige Arbeitsmaschine 2, 3 nicht notwendig, sodass ein einfacher Austausch gewährleistet ist. Optional weist das Ortungsmodul 7 Kontaktabschlüsse 24 auf, die mit Gegenkontakt 25 an der jeweiligen Antriebsmaschine in Berührungskontakt gebracht werden können, um als Datenschnittstelle oder als Energieversorgungsschnittstelle 26 zu wirken, über welcher das Ortungsmodul durch jeweilige Arbeitsmaschinen mit Energie versorgbar ist. Alternativ ist auch eine kabellose Versorgung des Ortungsmoduls 7 mit elektrischer Energie, insbesondere durch eine Induktionsladeeinrichtung, gemäß einem weiteren Ausführungsbeispiel vorgesehen.

Anstelle der hier beschriebenen Befestigungsmittel der Halteeinrichtung 17 können auch weitere Befestigungsmittel vorhanden sein, wie beispielsweise ein Klettverschluss, ein Befestigungsmagnet, eine Verschraubung, Klemmung oder eine Bindung.

Erst in einem weiteren Ausführungsbeispiel übernimmt das Ortungsmodul 7 an der jeweiligen Antriebsmaschine 2 oder 3 optional die Energieversorgung der Antriebsmaschine aus dem Energiespeicher 13, verwendet Lokalisierungsdaten eines Offline-Laufs, liest aktuelle Lokalisierungsdaten aus der Arbeitsmaschine aus und verwendet diese zur Navigation und ergänzt und/oder ersetzt Auswerte- und Aufnahmeeinheiten des modularen Lokalisierungssystems.

Der Benutzer 23 kann somit beispielsweise zunächst die Arbeitsmaschine 2, die als Unkrautvernichtungsroboter ausgebildet ist, mit dem Ortungsmodul 7 versehen, sodass dieses seine Arbeit auf dem Feld verrichtet. Anschließend entnimmt der Benutzer 23 das Ortungsmodul 7 und befestigt es an einer Arbeitsmaschine 3, die als Säroboter oder -Maschine ausgebildet ist. Während der Aussaat werden Position und Trajektorien der Saatreihen aufgezeichnet und gespeichert. Nach der Aussaat wird das Ortungsmodul 7 beispielsweise auf den Unkrautvernichtungsroboter beziehungsweise die Arbeitsmaschine 2 zurückmontiert oder optional auf eine stationäre Ladestation 27, beispielsweise in der Nähe der Basisstation 6, um den Energiespeicher 13 wieder aufzuladen und die angelesenen Daten auszulesen. Wird das Ortungsmodul 7 zurück auf den Unkrautvernichtungsroboter gesetzt, so nutzt dieser dann die gespeicherten Positionen und Trajektorien der Saatreihen als Differenz für die Unkrautvernichtung und navigiert mittels aktueller gemessener Position auf den vorher aufgezeichneten Trajektorien beziehungsweise Positionen, um eine vorteilhafte Unkrautvernichtung vorzunehmen und das Ernteergebnis zu verbessern. Vorzugsweise erfolgt der Austausch des Ortungsmoduls 7 automatisiert durch die Antriebsmaschinen 2 und 3.

## Patentansprüche

1. Agrarsystem (1) mit mehreren mobilen teil- oder vollautonom betreibbaren Arbeitsmaschinen (2,3) und mit einem Ortungssystem (5) zum Lokalisieren und/oder Steuern zumindest einer der Arbeitsmaschinen (2,3), wobei das Ortungssystem (5) zumindest ein Ortungsmodul (7) aufweist, das dazu ausgebildet ist, seine Position durch satellitengestützte Navigation festzustellen, **dadurch gekennzeichnet, dass** das Ortungsmodul (7) austauschbar an jeder der Arbeitsmaschinen (2,3) befestigbar ist.

2. Agrarsystem nach Anspruch 1, **dadurch gekennzeichnet, dass** das Ortungsmodul (7) eine Halteeinrichtung (17) zum lösbaren Befestigen an jeder der Arbeitsmaschinen (2,3) aufweist.

3. Agrarsystem nach einem der vorhergehenden Ansprüche, **dadurch gekennzeichnet, dass** die Halteeinrichtung (17) zumindest ein selbsthaftendes Element, wenigstens eine Befestigungsschraube, -Klemme, -Raste und/oder zumindest einen Saugnapf (18) aufweist.

4. Agrarsystem nach einem der vorhergehenden Ansprüche, **dadurch gekennzeichnet, dass** das Ortungsmodul (7) einen Energiespeicher (13) aufweist.

5. Agrarsystem nach einem der vorhergehenden Ansprüche, **dadurch gekennzeichnet, dass** das Ortungsmodul (7) eine Auswerteeinheit (10) aufweist.

6. Agrarsystem nach einem der vorhergehenden Ansprüche, **dadurch gekennzeichnet, dass** das Ortungsmodul (7) eine Umfeldsensorik (14) aufweist.

7. Agrarsystem nach einem der vorhergehenden Ansprüche, **dadurch gekennzeichnet, dass** das Ortungsmodul (7) zumindest einen Beschleunigungssensor aufweist.

8. Agrarsystem nach einem der vorhergehenden Ansprüche, **dadurch gekennzeichnet, dass** das Ortungsmodul (7) einen Datenspeicher (16) aufweist.

9. Agrarsystem nach einem der vorhergehenden Ansprüche, **dadurch gekennzeichnet, dass** das Ortungsmodul (7) eine Stromversorgungsschnittstelle (26) und/oder eine Datenübertragungsschnittstelle (11) aufweist.

10. Agrarsystem nach einem der vorhergehenden Ansprüche, **dadurch gekennzeichnet, dass** das Ortungsmodul (7) ein Wetterschutzgehäuse (8) aufweist.

11. Agrarsystem nach einem der vorhergehenden Ansprüche, **dadurch gekennzeichnet, dass** zumindest eine der Arbeitsmaschinen (2,3) ein Unkrautvernichtungsroboter oder eine Sämaschine ist.

12. Agrarsystem nach einem der vorhergehenden Ansprüche, **gekennzeichnet durch** eine insbesondere stationäre Basisstation (6) und/oder eine insbesondere stationäre Ladestation (27).
